# EUROPÄISCHE PATENTSCHRIFT

(11) **EP 1 300 285 B1**
(45) Veröffentlichungstag und Bekanntmachung des Hinweises auf die Patenterteilung: **08.06.2005**
(21) Anmeldenummer: 02021520.8
(22) Anmeldetag: 26.09.2002
(51) Int. Cl.: B60P 7/13, B60P 1/64

(54) **Anordnung zur Halterung unterschiedlicher Container-Typen auf einem Fahrgestell**
Arrangement for locking of different types of containers on a chassis
Arrangement pour fixation de différentes types de conteneurs sur un chassis

(30) Priorität: 02.10.2001 DE 10148704; 18.07.2002 DE 10232561
(43) Veröffentlichungstag der Anmeldung: 09.04.2003
(73) Patentinhaber: Schmitz Gotha Fahrzeugwerke GmbH, 99867 Gotha (DE)
(72) Erfinder: Schmidt, Hartmut, 99869 Seebergen (DE); Koch, Josef, 89081 Ulm (DE)
(74) Vertreter: Weber, Gerhard, Dipl.-Phys.

(56) Entgegenhaltungen:
- EP-A- 1 232 905
- DE-A- 10 047 093
- DE-A- 19 606 263
- DE-U- 20 010 144
- DE-U- 20 012 977
- NL-C- 1 013 424

## Beschreibung

Die Erfindung betrifft eine Anordnung zur Halterung unterschiedlicher Container-Typen auf einem Fahrgestell gemäß den Merkmalen der Oberbegriffe der unabhängigen Ansprüche 1 oder 26, sowie ein entsprechendes Fahrgestell gemäß dem unabhängigen Anspruch 30.

Als Wechselbehälter auf Fahrgestellen sind Container verschiedener Größe gebräuchlich, welche im unteren Bereich von Stirnseiten und Längsseiten Beschläge aufweisen, in welche fahrzeugseitige Verriegelungen eingreifen können. Neben ISO-Containern mit ebener Auflagefläche sind insbesondere sogenannte High Cube (HC)- oder Gooseneck-Container von Bedeutung, welche zur Frontseite hin in einem Bereich um die Mittellängsebene des Containers einen sogenannten Gooseneck-Tunnel aufweisen, welcher eine Stufe der Längsträger des Fahrgestells seitlich umgreift.

Gebräuchlich sind insbesondere Container der Länge 20' und 40' mit und ohne Gooseneck-Tunnel sowie Container der Länge 45' mit Gooseneck-Tunnel, wobei für letztere zur Einhaltung von Vorschriften hinsichtlich Gesamtlänge und frontseitigem Schwenkradius bekannt ist, die Ecksäulen anzuschrägen, um einen begrenzten Schwenkradius um den Königszapfen nicht zu überschreiten.

Zur frontseitigen Halterung der unterschiedlichen Containertypen sind unterschiedliche Verriegelungsvorrichtungen an einem frontseitigen Querträger, welcher vorzugsweise in Längsrichtung in verschiedene Positionen verstellbar ist, bekannt, insbesondere für ISO-Container Drehzapfen-Verriegelungen mit vertikalen, über die Aufliegeebene des Fahrgestells hinausragenden und von unten in Öffnungen von Container-Beschlägen hineinragenden Drehzapfen. Bei HC-Containern der Länge 45' sind in den abgeschrägten Eckbeschlägen die Öffnungen zur Aufnahme von horizontalen Steckbolzen gegenüber der Position bei gleich breiten Containern ohne Abschrägung zur Mittellängsebene des Containers hin um ein geringes Maß versetzt. Container mit derart abgeschrägten Eckbeschlägen sind beispielsweise beschrieben in WO98/19883 A1.

Um einerseits mit einer Anordnung verschiedene Container-Typen halten zu können und andererseits die Vorschriften auch bei 45'-Containern einhalten zu können sind verschiedene Kombi-Anordnungen bekannt. Beispielsweise beschreibt eine Pressemitteilung zur IAA 2000 ein Verriegelungssystem unter der Bezeichnung Winglock, welches durch abgeschrägte und seitlich verfahrbare Verriegelungsarme mit Steckbolzen die Halterung von HC-Containern mit abgeschrägten und mit rechteckigen Beschlägen ermöglicht. Die Anordnung ermöglicht aber nicht die Halterung von ISO-Containern mittels vertikaler Drehzapfen. Dasselbe Verriegelungssystem ist auch Gegenstand der EP 0 965 485 A2.

Aus der gattungsbildenden DE 200 12 977 U1 ist eine Vorrichtung bekannt, welche an einem Querträger nach oben zur Containermitte hin wegschwenkbare Schwenkarme enthält. Die Schwenkarme weisen an den äußeren Enden zum einen eine vertikale Drehzapfenverriegelung und zum anderen eine horizontale Steckbolzenverriegelung für HC-Container mit rechteckigen Beschlägen auf und können in ausgeklappter Stellung zur Halterung von passenden Containern dienen. Zusätzlich sind nahe bei der Mittellängsebene des Fahrgestells an dem Querträger weitere Steckbolzenverriegelungen vorgesehen, welche innerhalb eines zulässigen Durchdrehradius um den Königszapfen liegen und in entsprechend nahe bei der Mittellängsebene eines 45'-HC-Containers befindliche Beschläge eingreifen können welche hierfür gesondert vorgesehen werden müssen. Die in Parkstellung hochgeklappten Schwenkarme befinden sich gleichfalls vollständig innerhalb des genannten Durchdrehradius.

Verriegelungsanordnungen mit einer Drehzapfenverriegelung und einer Steckbolzenverriegelung sind auch aus der DE 196 06 263 A1, wo ein Drehzapfen-Verriegelungsgehäuse um eine durch den Steckbolzen führende vertikale Schwenkachse verschwenkt und auf dem Querträger abgesetzt werden kann, und aus der DE 100 47 093 A1, wo die Schwenkachse in Fahrtrichtung vor dem Steckbolzen liegt, bekannt. Diese Verriegelungsanordnungen, bei welchen das Drehzapfen-Verriegelungsgehäuse in seiner Halteposition in Verriegelungsrichtung des Steckbolzens liegt, sind aber nicht auch zur Halterung von 45'-HC-Containern geeignet.

Der Erfindung liegt die Aufgabe zugrunde, eine vorteilhafte Anordnung zur Halterung unterschiedlicher Container anzugeben.

Erfindungsgemäße Anordnungen sind in den unabhängigen Patentansprüchen 1 und 26 beschrieben. Die abhängigen Ansprüche enthalten vorteilhafte Ausgestaltungen und Weiterbildungen der Erfindung. Der unabhängige Patentanspruch 30 betrifft ein Fahrgestell mit einer derartigen Anordnung.

Die vom Steckbolzen der zweiten Verriegelungseinrichtung getrennte Anordnung der ersten Verriegelungseinrichtung mit dem Verriegelungszapfen für Container eines ersten Container-Typs an einem Schwenkarm ermöglicht vorteilhafterweise die einfache Verlagerung der ersten Verriegelungseinrichtung zwischen einer Halteposition, in welcher ein Container mittels des vertikal von unten in den Eckbeschlag eingreifenden Drehzapfens verriegelbar ist, und einer Parkposition, in welcher bei Verriegelung eines 45'-HC-Containers mittels des Steckbolzens der zweiten Verriegelungseinrichtung die erste Verriegelungseinrichtung vollständig innerhalb des vorgeschriebenen Drehkreisradius um den Königszapfen liegt.

Bei den Verriegelungseinrichtungen sei hierbei und im folgenden als selbstverständlich vorausgesetzt, dass diese jeweils paarweise an entgegengesetzten Enden des Querträgers auftreten.

Die zweite Verriegelungseinrichtung weist vorzugsweise einen Bolzenträger auf, auf welchem der Steckbolzen angeordnet ist und welcher aus einer Halteposition, in welcher ein Container zweiten Typs verriegelbar ist, in seiner Position relativ zu dem Querträger verlagerbar ist. Gemäß einer bevorzugten Ausführung ist der Bolzenträger gleichfalls als relativ zum Querträger schwenkbarer, vom Schwenkarm der ersten Verriegelungsanordnung verschiedener Schwenkarm ausgebildet.

Die getrennte Anordnung von Steckbolzen und Verriegelungszapfen als Verriegelungselementen für unterschiedliche Container-Typen über verschiedene schwenkbare Trägerarme an einem gemeinsamen, in Längsrichtung des Fahrgestells variabel positionierbaren Querträger ermöglicht zum einen die unabhängige mechanische Positionierung eines der Verriegelungselemente in dessen jeweiliger Halteposition am Eckbeschlag des zugehörigen ContainerTyps und zum anderen das Verschwenken des jeweils anderen Verriegelungselements aus dessen Halteposition, soweit diese für den Einsatz des einen Verriegelungselements störend ist.

Dies gilt insbesondere für die Halteposition der zweiten Verriegelungseinrichtung für Container-Typen, bei welchen der Eckbeschlag sehr nahe an dem zulässigen Durchdrehkreis liegt und, um diesen nicht zu überragen, auch abgeschrägt sein kann, wobei die Festlegung des Containers durch einen horizontal in den Eckbeschlag eingreifenden Steckbolzen erfolgt. Die in der Halteposition innerhalb des zulässigen Durchdrehkreises liegende zweite Verriegelungseinrichtung schwenkt beim Lösen typischerweise über den Durchdrehkreis hinaus. Bei Verriegelung eines zweiten Container-Typs durch die zweite Verriegelungseinrichtung ist die erste Verriegelungseinrichtung durch Verschwenken des Schwenkarms in Richtung zur Mittellängsebene des Fahrgestells verlagert und befindet sich gleichfalls innerhalb des zulässigen Durchdrehkreises, wobei aber beide Verriegelungseinrichtungen mit Eckbeschlägen der jeweiligen Container korrespondieren und keine zusätzlichen Container-Beschläge erforderlich.

Die separat verschwenkbare Anordnung beider Verriegelungseinrichtungen an einem gemeinsamen Querträger führt dabei zu einer besonders vorteilhaften und kompakten Anordnung, ohne dass wie bei der aus der DE 200 12 977 U1 zusätzliche Beschläge nahe der Mittellängsachse erforderlich sind. Vorzugsweise überdeckt der Schwenkarm in der Halteposition der ersten Verriegelungseinrichtung wenigstens teilweise die Halteposition des Bolzenträgers, jeweils relativ zu dem gemeinsamen Querträger betrachtet.

Die zweite Verriegelungseinrichtung ist insbesondere für überlange HC-Container-Typen mit abgeschrägten Eckbeschlägen vorgesehen, bei welchen die Position des Steckbolzens gegenüber nicht abgeschrägten Eckbeschlägen um ca. 85 mm zur Fahrgestell-Mittellängsebene hin versetzt ist. Zur Verriegelung von HC-Container-Typen mit nicht abgeschrägten Eckbeschlägen mittels horizontaler Steckbolzen sind daher andere Bolzen-Positionen vorzusehen. Hierfür kann gemäß einer bevorzugten Ausführung eine dritte Verriegelungseinrichtung vorhanden sein, welche insbesondere baulich vereinigt mit der ersten Verriegelungseinrichtung an dem Schwenkarm angeordnet sein kann. In anderer Ausführung kann auch durch Querverschiebbarkeit des Bolzenträgers derselbe Steckbolzen für die zweite und die dritte Verriegelungseinrichtung benutzt sein.

Als Halteposition der verschiedenen Verriegelungseinrichtungen seien dabei die Positionen verstanden, in welchen die jeweiligen Verriegelungselemente, insbesondere Steckbolzen oder vertikale Verriegelungszapfen in Eingriff mit Containerbeschlägen stehen. Da nur jeweils eine der Verriegelungen benutzt wird befinden sich die anderen Verriegelungen, soweit sie der aktuell benutzten Verriegelung im Wege stünden oder anderweitig stören könnten, dann vorzugsweise in als Parkpositionen bezeichneten definierten Positionen, welche von den Haltepositionen verschieden sind. Die Verriegelungseinrichtungen sind vorteilhafterweise in ihren Haltepositionen und vorzugsweise auch in ihren Parkpositionen durch Sicherungselemente festlegbar. Verlagerungen einer Verriegelungseinrichtung zwischen der Halteposition und der Parkposition können je nach Ausführungsform Bewegungskomponenten mit Ausweichfunktion in Zwischenpositionen umfassen.

Die dritte Verriegelungseinrichtung kann in verschiedenen vorteilhaften Ausführungen mit der erfindungsgemäßen Kombination der ersten und der zweiten Verriegelungseinrichtung realisiert sein. Eine erste Ausführung kann die dritte Verriegelungseinrichtung auf einen eigenen, relativ zum Bolzenträger der zweiten Verriegelungseinrichtung und/oder zum Schwenkarm der ersten Verriegelungseinrichtung vorsehen. Eine andere vorteilhafte Ausführungsform kann vorsehen, dass die dritte Verriegelungseinrichtung denselben Steckbolzen benutzt wie die zweite Verriegelungseinrichtung, wofür eine Trägeranordnung für diesen Steckbolzen in Richtung des Querträgers, d.h. quer zur Fahrgestell-Längsachse verstellbar und mit dem Steckbolzen in verschiedene Abstände zur Mittellängsebene gebracht werden kann. Dies kann beispielsweise ähnlich der von der genannten Winglock-Verriegelung bekannten Verschiebung eines einen schwenkbaren Bolzenarm tragenden Teleskop-Trägerrohres erfolgen. Eine andere Variante kann vorsehen, dass bei einem den Steckbolzen tragenden, um eine vertikale Schwenkachse schwenkbaren Träger die Schwenkachse in einem Langloch geführt und dadurch der seitliche Abstand des Trägers und damit des Schwenkbolzens variiert werden kann.

in wieder anderer, bevorzugter Ausführung kann die dritte Verriegelungseinrichtung am Ende des die erste Verriegelungseinrichtung tragenden Schwenkarms gemeinsam mit dieser angeordnet sein. Ein besonders vorteilhaftes Beispiel hierfür ist in den Abbildungen dargestellt und zusammen mit diesen noch eingehend erläutert.

Durch die Verschwenkung in die Parkposition kann die erste Verriegelungseinrichtung mit dem Hebelarm in einen Bereich innerhalb des zulässigen Durchdrehkreises um den Königszapfen gebracht werden. Die Verschwenkung des Schwenkarms kann um eine im wesentlichen horizontale Achse erfolgen, welche vorzugsweise näher bei der Mittellängsebene liegt als ein Mechanismus zur horizontalen Verschiebung des Steckbolzens der zweiten Verriegelungseinrichtung. Der Schwenkarm kann dann vorteilhafterweise in Form eines zur zweiten Verriegelungseinrichtung nach unten hin offenen U-Profils ausgeführt sein, welches in der Halteposition der dritten Verriegelungseinrichtung die - zweite Verriegelungseinrichtung in deren Parkposition seitlich umgibt.

Vorzugsweise ist der Schwenkarm um eine vertikale Achse schwenkbar, die insbesondere in konstruktiv günstiger Weise mit einer Schwenkachse eines fest mit dem Steckbolzen der zweiten Verriegelungseinrichtung verbundenen Bolzenträgers zusammenfallen kann. Der Schwenkarm ist dabei aus der Halteposition um nahezu 180°, vorzugsweise zwischen 150° und 180° in die Parkposition verschwenkbar. Die Schwenkachse des Schwenkarms der ersten Verriegelungseinrichtung liegt vorteilhafterweise in Richtung quer zur Längsrichtung des Fahrgestells zwischen der Halteposition der Steckbolzen der zweiten Verriegelungseinrichtung und der Mittellängsebene des Fahrgestells. Die erste Verriegelungseinrichtung liegt in ihrer Parkposition vorteilhafterweise weniger als 50 % einer halben Containerbreite von der Mittellängsebene beabstandet.

Vorteilhafterweise ist der Querträger als in Fahrtrichtung zumindest teilweise offenes Profil ausgeführt und nimmt den Schwenkarm und eventuell auch die mit diesem verbundene erste Verriegelungseinrichtung durch die Profilöffnung zumindest teilweise auf. In der ersten Verriegelungseinrichtung ist hierfür vorteilhafterweise vorgesehen, den Verriegelungs-Zapfen so verlagern zu können, dass er nicht über die vertikalen Abmessungen des Verriegelungsgehäuses hinausragt.

Bei um eine gemeinsame vertikale Achse verschwenkbarem Schwenkarm der ersten und Bolzenträger der zweiten Verriegelungseinrichtung nehmen vorteilhafterweise Schwenkarm und Bolzenträger in bezüglich der Schwenkachse achsialer, d.h. vertikaler Richtung unterschiedliche Abschnitte ein und können so einfach gegeneinander um die gemeinsame Schwenkachse verschwenkt werden. Hierbei kann es unter Umständen günstig sein, wenn Bolzenträger und Schwenkarm auch relativ zueinander radial verschiebbar sind, um einerseits die geringe Differenz des seitlichen Abstands von der Mittellängsebene des Fahrgestells zwischen den Verriegelungselementen der zweiten und der dritten Verriegelungselementen konstruktiv vorteilhaft realisieren zu können und andererseits den Bolzenträgern an der ersten Verriegelungseinrichtung an dem Schwenkarm vorbei zu führen.

Die zweite Verriegelungseinrichtung kann in anderer vorteilhafter Ausführungsform als nicht schwenkbarer Bolzenträger ausgeführt sein, welcher aber z. B. durch Verschiebung quer zur Längsrichtung des Fahrgestells relativ zum Querträger verlagerbar und/oder aus dem Querträger entnehmbar und gegebenenfalls in anderer Position, insbesondere einer Parkposition in diesen wieder einsetzbar. In wieder anderer Ausführung kann der Steckbolzen der zweiten Verriegelungseinrichtung in bezüglich des Querträgers fester Position angeordnet sein.

Für die Verriegelung von Containern des zweiten oder gegebenenfalls dritten Typs mittels horizontal in stirnseitige Öffnungen von Eckbeschlägen eingreifenden Steckbolzen kann vorteilhafterweise der Querträger mitsamt den Verriegelungseinrichtungen auch bei auf dem Fahrgestell aufliegenden Container in Fahrzeuglängsrichtung verschiebbar und in der Halteposition arretierbar sein.

Vorteilhafterweise ist der Querträger bis zu den beiden seitlich entgegengesetzten Positionen der Steckbolzen der zweiten Verriegelungseinrichtung einstückig durchgehend und dadurch besonders stabil. In den Endbereichen des Querträgers können zusätzliche Elemente, z. B. als eingeschweißte Stützplatten zur vertikalen Abstützung von relativ zum Querträger positionsvariablen Verriegelungseinrichtungen vorgesehen sein.

Die Erfindung ist nachfolgend anhand bevorzugter Ausführungsbeispiele unter Bezugnahme auf die Abbildungen noch eingehend veranschaulicht. Dabei zeigt:
- Fig. 1: eine teilgeschnittene Ansicht einer Verriegelungsanordnung mit Blickrichtung in Fahrtrichtung
- Fig. 2: eine Draufsicht auf Fig. 1
- Fig. 3: ein Verriegelungsgehäuse in Seitenansicht
- Fig. 4: Fig. 3 mit abgesenktem Verriegelungszapfen
- Fig. 5: die Verriegelungsanordnung mit der zweiten Verriegelungseinrichtung in Parkposition
- Fig. 6: die Verriegelungsanordnung mit der ersten und zweiten Verriegelungseinrichtung in Parkposition
- Fig. 7: einen horizontal schwenkbaren Schwenkarm in U-Form
- Fig. 8: einen vertikal schwenkbaren Schwenkarm in U-Form
- Fig. 9: eine erste Ausführung mit einem verschiebbaren Bolzenträger in verschiedenen Verriegelungspositionen,
- Fig. 10: eine zu Fig. 1 (C) alternative Position der Verriegelungen,
- Fig. 11: eine Ausführungsform mit einem festen Steckbolzen.

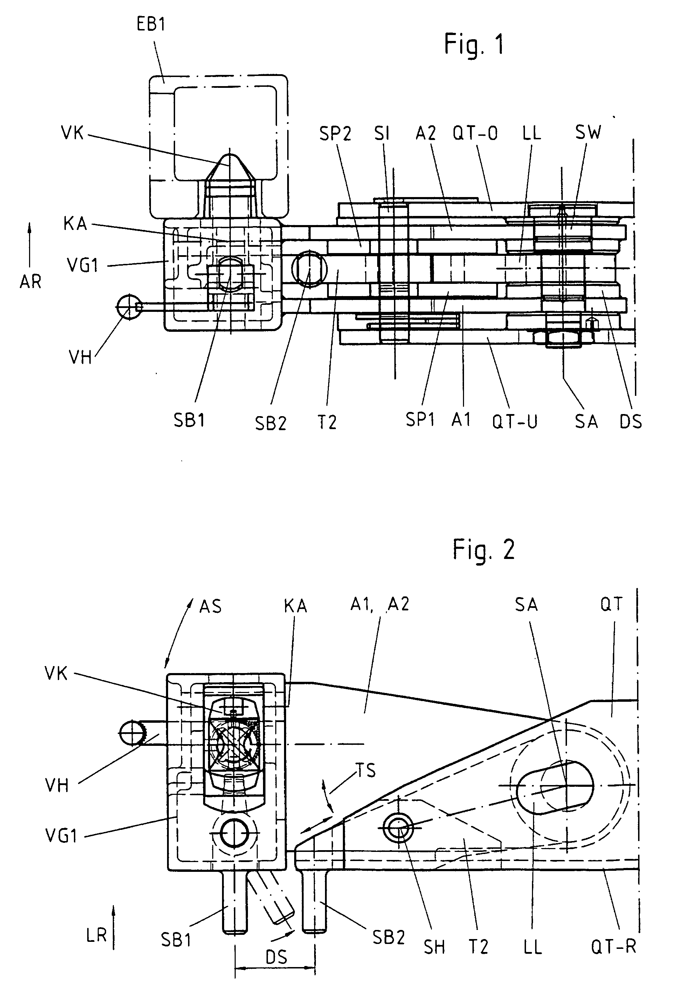

Die in Fig. 1 und Fig. 2 skizzierte Verriegelungsanordnung zeigt drei verschiedene Verriegelungseinrichtungen gemeinsam in ihren jeweiligen Haltepositionen. Dabei sind nicht jeweils alle Elemente eingezeichnet, um die Übersichtlichkeit der Abbildungen zu verbessern.

Die erste Verriegelungsanordnung ist am Ende eines Querträgers QT angeordnet, welcher zumindest im Bereich der Verriegelungsanordnung als ein U-förmiges Profil mit Flächen QT-O, QT-R und QT-U ausgeführt und in Fahrtrichtung LR, d.h. gegenüber der Wand QT-R zumindest teilweise, vorzugsweise überwiegend oder vollständig offen ist.

Ein Verriegelungsgehäuse VG1 enthält als Verriegelungselement der ersten Verriegelungseinrichtung einen Drehzapfen VK, welcher vertikal über die obere Fläche des Verriegelungsgehäuses VG1 hinausragt und in eine untere Öffnung eines Eckbeschlags EB1 eines Containers hineinragt. Durch Verdrehen des Zapfens um eine vertikale Achse mittels des Verriegelungshebels VH wird der Beschlag mit dem Verriegelungsgehäuse verriegelt. Drehzapfen-Verriegelungen sind allgemein bekannt und gebräuchlich, so dass auf Details der Drehzapfenverriegelung hier nicht weiter eingegangen wird.

In dem Gehäuse ist zusätzlich eine dritte Verriegelungseinrichtung mit einem Steckbolzen SB1 untergebracht. Der Steckbolzen ragt horizontal entgegen der Fahrtrichtung über das Verriegelungsgehäuse VG1 hinaus und kann in eine stirnseitige Öffnung eines nicht abgeschrägten Eckbeschlags eingreifen.

Das Verriegelungsgehäuse VG1 ist an einem Schwenkarm gehalten, welcher aus zwei parallelen horizontalen Armplatten A1, A2 aufgebaut ist, welche mit dem Verriegelungsgehäuse vorzugsweise verschweißt sind. Der Schwenkarm ist um eine vertikale Schwenkachse SA in Pfeilrichtung AS horizontal aus der skizzierten Halteposition von erster und dritter Verriegelungseinrichtung verschwenkbar. Die Armplatten A1, A2 verlaufen innerhalb des Profils des Querträgers QT parallel zu dessen horizontalen Wänden QT-O, QT-U und liegen an diesen an oder diesen mit geringem Abstand gegenüber.

Ein zweiter horizontaler Steckbolzen SB2 als Verriegelungselement einer zweiten Verriegelungseinrichtung ist fest mit einem plattenförmigen Träger T2 verbunden. Der Träger T2 weist eine der Rückwand QT-R des Querträgerprofils abgewandte Kante auf, welche schräg gegen die Rückwand QT-R verläuft und in der skizzierten Halteposition der zweiten Verriegelungseinrichtung innerhalb eines zulässigen Durchdrehkreisbogens um den Königszapfen des Fahrgestell-Auflagers verläuft und sich dabei eng an den Kreisbogen anschmiegt. Der zweite Steckbolzen SB2 ragt horizontal über die durch die Rückwand QT-R des Querträgers gebildete Anschlagkante für eine Container-Stirnkante hinaus und kann in einen abgeschrägten Eckschlag eines 45'-HC-Containers eingreifen.

Der Träger T2 ist um die mit dem Schwenkarm gemeinsame vertikale Schwenkachse SA schwenkbar. Da der zweite horizontale Steckbolzen SB2 nur um eine geringe Differenz ca. DS= 85 mm näher zur Mittellängsebene des Fahrgestells liegt als der erste horizontale Steckbolzen SB1 und der Drehzapfen VK, liegt der zweite Träger in der skizzierten Position eng an dem Verriegelungsgehäuse VG1 an, so dass nicht ohne weiteres eine Verschwenkung des Trägers T2 im Uhrzeigersinn über die skizzierte Position hinaus relativ zu dem Verriegelungsgehäuse möglich ist. Eine solche relative Verschwenkung wird in der vorteilhaften skizzierten Ausführung dadurch ermöglicht, dass der Träger T2 ein Langloch LL um die Schwenkwelle SW der Schwenkachse SA aufweist und durch Führung des Langlochs auf der Schwenkwelle vom Verriegelungsgehäuse weg radial verschoben und in der verschobenen Position in Pfeilrichtung TS verschwenkt werden kann.

Die Welle SW ist im skizzierten Beispiel zweiseitig abgeflacht ausgeführt. Eine relative radiale Verschiebung des Schwenkarms A1, A2 nach außen ermöglicht gleichfalls das relative Verschwenken.

Die Trägerplatte T2 liegt in bezüglich der vertikalen Schwenkachse SA achsialer Richtung beabstandet zwischen den Armplatten A1, A2 und parallel zu diesen. Zur Stabilisierung der verschiedenen Verriegelungseinrichtungen gegen vertikale Kräfte sind horizontale Stützplatten SP1, SP2 mit der Rückwand QT-R des Querträgers verschweißt, welche in achsialer Richtung zwischen sich den Träger 2 und gegen die horizontalen Wände QT-O, QT-U des Querträgers die Armplatten A2 bzw. A1 eng einschließen. Im Bereich der Schwenkwelle SW ist eine achsiale Abstützung durch Distanzscheiben DS zwischen Trägerplatte T2 und Armplatten A1, A2 gegeben, wobei die Distanzscheiben auch als Stufenscheiben ausgebildet sein und in gegenüber dem Wellendurchmesser größere Bohrungen der Armplatten A1, A2 anliegen können.

Die Steckbolzen SB1, SB2 sind in Fig. 1 und Fig. 2 als in der skizzierten Halteposition parallel zur Längsrichtung LR des Fahrgestells ausgerichtet eingezeichnet. Zur Anpassung an die Kreisbogenbewegung um die Schwenkachse können die Steckbolzen aber auch annähernd tangential um die Schwenkachse ausgebildet sein, um beim Einschwenken in die Öffnungen der Eckbeschläge möglichst geringes seitliches Spiel in den Öffnungen aufzuweisen.

Während bei der Benutzung der zweiten Verriegelungseinrichtung mit dem in einen abgeschrägten Eckbeschlag eingreifenden Steckbolzen SB2 das Verriegelungsgehäuse VG1 weit weggeschwenkt sein muss, um innerhalb des zulässigen Durchdrehkreises DR zu liegen, kann bei Benutzung der dritten Verriegelungseinrichtung das Wegschwenken der zweiten Verriegelungseinrichtung auf einen kleinen Schwenkwinkel beschränkt werden, der ausreicht, um den zweiten Steckbolzen vollständig in Fahrtrichtung vor die durch die Rückwand QT-R gebildete Anschlagfläche zu verlegen. Die Trägerplatte T2 mit dem zweiten Bolzen SB2 kann dann zwischen den Armplatten A1, A2 verbleiben. Dies ermöglicht die Ausbildung des Schwenkarms als in der Halteposition in Fahrtrichtung durch eine weitere Platte abgeschlossenes oder einstückiges U-Profil mit geringerer Empfindlichkeit gegen Scherverformungen durch vertikale Krafteinwirkung auf die erste oder dritte Verriegelungseinrichtung.

Bei Benutzung der ersten Verriegelungseinrichtung mit dem Drehzapfen ist die Stellung der anderen Verriegelungseinrichtungen im wesentlichen unerheblich, da der Boden des Containers oberhalb der Steckbolzen liegt.

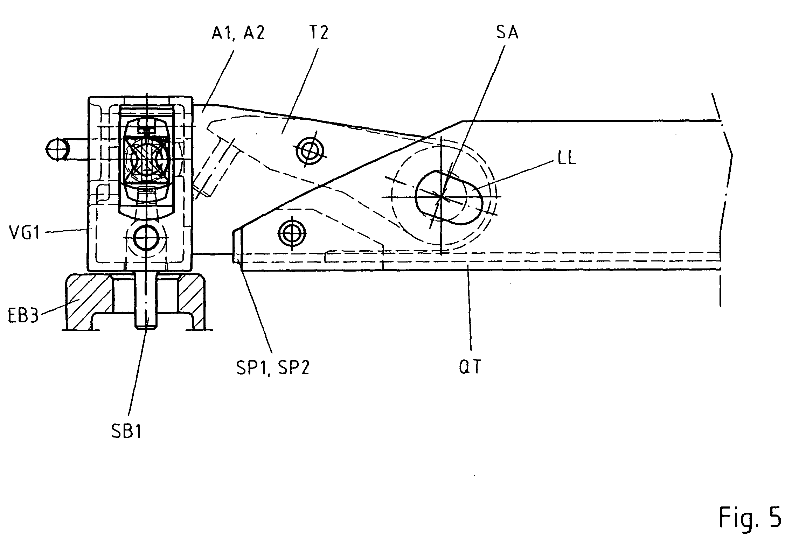

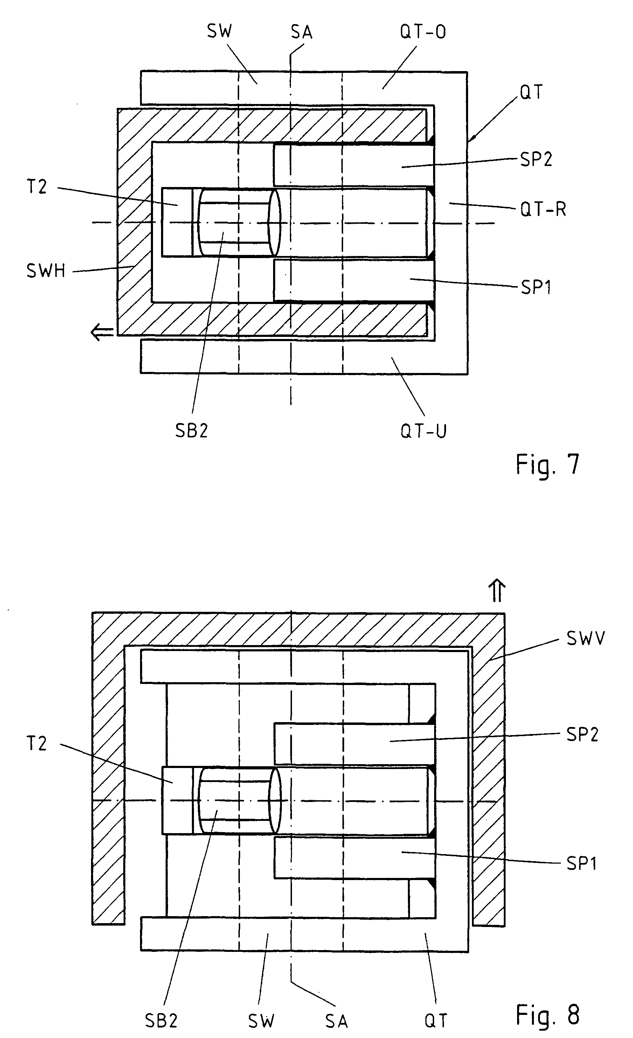

Die in Fig. 5 mit unterbrochener Linie in einer möglichen Parkposition innerhalb der Vertikalprojektion des Schwenkarms bzw. dessen Platten A1, A2 liegende zweite Verriegelungseinrichtung verdeutlicht in dieser Position auch die Möglichkeiten, den Schwenkarm an seiner hier in Fahrtrichtung liegenden Seite zwischen Platten A1, A2 zu einer U-Form zu schließen oder den Schwenkarm z.B. als unten offene U-Form auszuführen und um eine horizontale Achse nach oben weg bzw. von oben über die Parkposition der zweiten Verriegelungseinrichtung zu schwenken. Fig. 7 zeigt im Schnitt mit Blickrichtung quer zur Fahrzeuglängsachse eine Variante mit horizontal verschwenkbarem Schwenkarm SWH in entgegen der Fahrtrichtung offener U-Form, Fig. 8 einen vertikal verschwenkbaren Schwenkarm SWH mit nach unten offener U-Form. Einzelne Elemente sind dabei, insbesondere zu der Ausführung nach Fig. 8 in konstruktiven Details anzupassen, was in Fig. 7 und Fig. 8 noch nicht berücksichtigt ist.

Die Fig. 5 zeigt in Draufsicht eine Situation, in welcher die dritte Verriegelungseinrichtung mit dem ersten Steckbolzen SB1 in eine stirnseitige Öffnung eines nicht abgeschrägten Eckbeschlags EB3 z.B. eines 20'- oder 40'-HC-Containers eingreift und die Trägerplatte T2 um einen geringen Schwenkwinkel gegen die in Fig. 2 skizzierte Position verschwenkt ist, aber unverändert von den Armplatten A1, A2 vollständig überdeckt ist. Die Trägerplatte T2 mit dem Steckbolzen SB2 kann aber auch um einen größeren Winkel vollständig aus dem Bereich des Schwenkarms herausgeschwenkt sein.

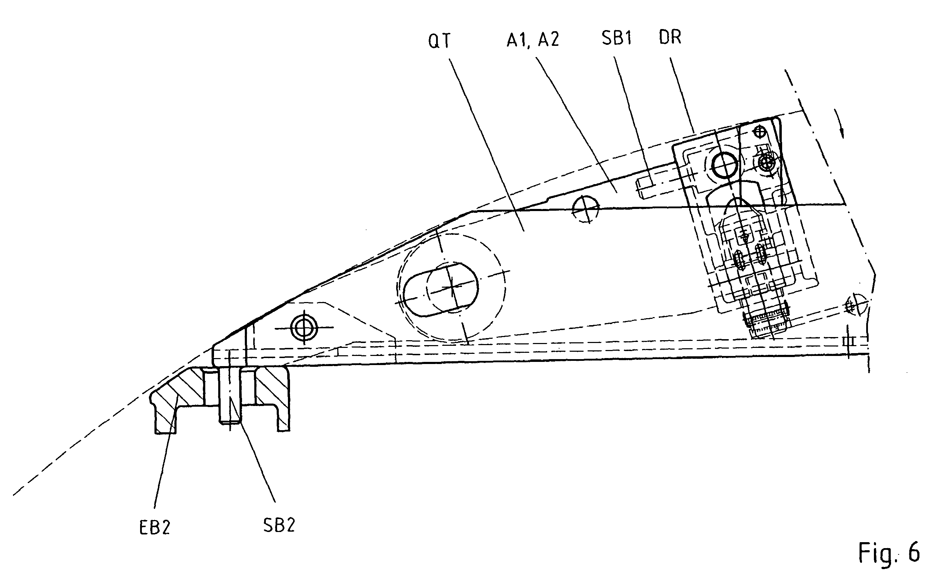

Demgegenüber ist bei der in Fig. 6 skizzierten Situation, in welcher der an der Trägerplatte T2 befestigte zweite Steckbolzen SB2 in eine stirnseitige Öffnung eines abgeschrägten Eckbeschlags EB2 eingreift, der Schwenkarm mit dem Verriegelungsgehäuse VG1 um nahezu 180° gegen die in Fig. 2 skizzierte Halteposition verschwenkt und teilweise in das in Fahrtrichtung offene Profil des Querträgers eingerückt ist. Eine Überdeckung der Parkposition des Hebelarms mit der Halteposition der zweiten Verriegelungseinrichtung ist nicht gegeben.

Die Verriegelungseinrichtungen können in ihren jeweiligen Haltepositionen vorteilhafterweise durch Sicherungseinrichtungen gehalten sein, wobei insbesondere durch die horizontale Schwenkbewegung um die vertikale Schwenkachse SA eine Sicherung durch Absperren der Schwenkbewegung besonders vorteilhaft ist. Eine solche Sicherung kann beispielsweise durch einen in fluchtende Sicherungsbohrungen SH von Querträger und Trägerplatte T2 bzw. Schwenkarm A1, A2 einsteckbaren Sicherungsbolzen SI erfolgen.

Der Querträger QT erstreckt sich mit seiner Rückwand QT-R seitlich im wesentlichen bis zu dem Steckbolzen SB2, so dass eine hohe Aussteifung gegen Vertikalkräfte gegeben ist. Der Querträger kann vor dem Steckbolzen SB2 enden oder diesen umgreifen. Eine zusätzliche Abstützung der Verriegelungseinrichtungen erfolgt durch die in den Endbereichen des Querträgers vorgesehenen Stützplatten SP1, SP2.

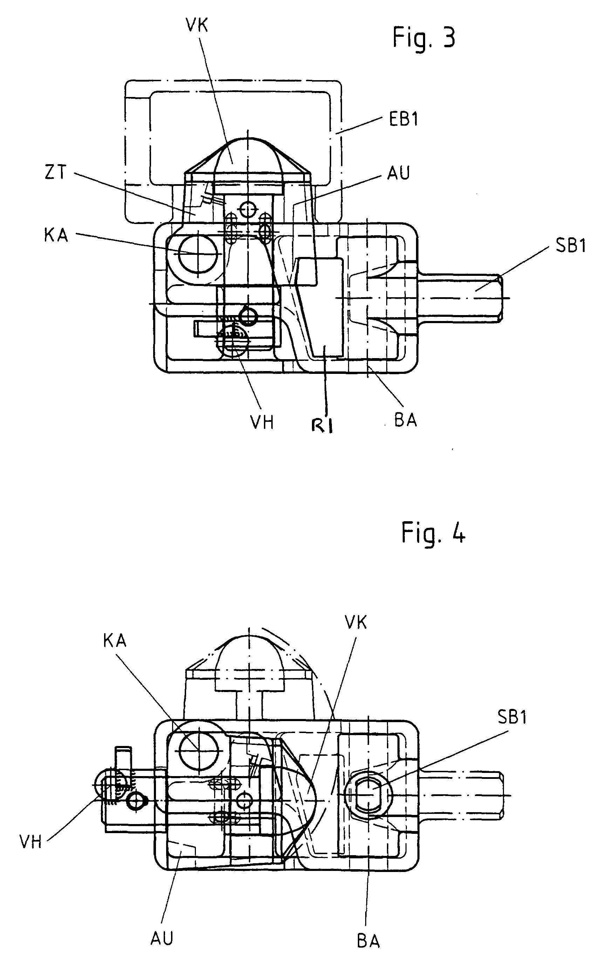

Die Fig. 3 und Fig. 4 zeigen eine vorteilhafte Ausführungsform eines Verriegelungsgehäuses VG1, welches durch Verschwenken des Drehzapfens VK in einen Bereich zwischen oberer und unterer Begrenzungsfläche des Verriegelungsgehäuses, die vertikal nicht über die Armplatten A1 und A2 nach unten bzw. oben überstehen, in eine besonders flache Form gebracht und damit auch weit in das in Fahrtrichtung offene Profil des Querträgers eingeschwenkt werden kann.

Vorteilhaft bei der in Fig. 3 und Fig. 4 skizzierten Ausführung ist insbesondere auch, dass der Verriegelungszapfen, welcher in einem Zapfenträger gehalten und drehbar geführt ist, um eine horizontale Kippachse KA kippbar ist und dabei in der in Fig. 3 skizzierten aufrechten Position durch einen lösbaren Riegel RI abgestützt ist.

Der Riegel ist gemäß dem skizzierten Beispiel durch einen dem ersten Steckbolzen SB1 abgewandten und mit diesem fest verbundenen und um eine vertikale Achse BA im Verriegelungsgehäuse schwenkbaren Fortsatz gebildet, welcher sich auf dem Boden des Verriegelungsgehäuses abstützt und in einer Aussparung AU des Zapfenträgers ZT einliegt. Die Aussparung AU sichert zugleich den Steckbolzen SB1 gegen Verschwenkung um die Achse BA. Durch anhebendes Kippen des Zapfenträgers um die Kippachse KA wird der Steckbolzen SB1 zur Verschwenkung um die Achse BA freigegeben und nach Verschwenken des Bolzens und des Riegels RI um die Achse BA gibt, wie in Fig. 4 skizziert, der Riegel den Zapfenträger zum Einschwenken des Zapfens in das Gehäuse frei.

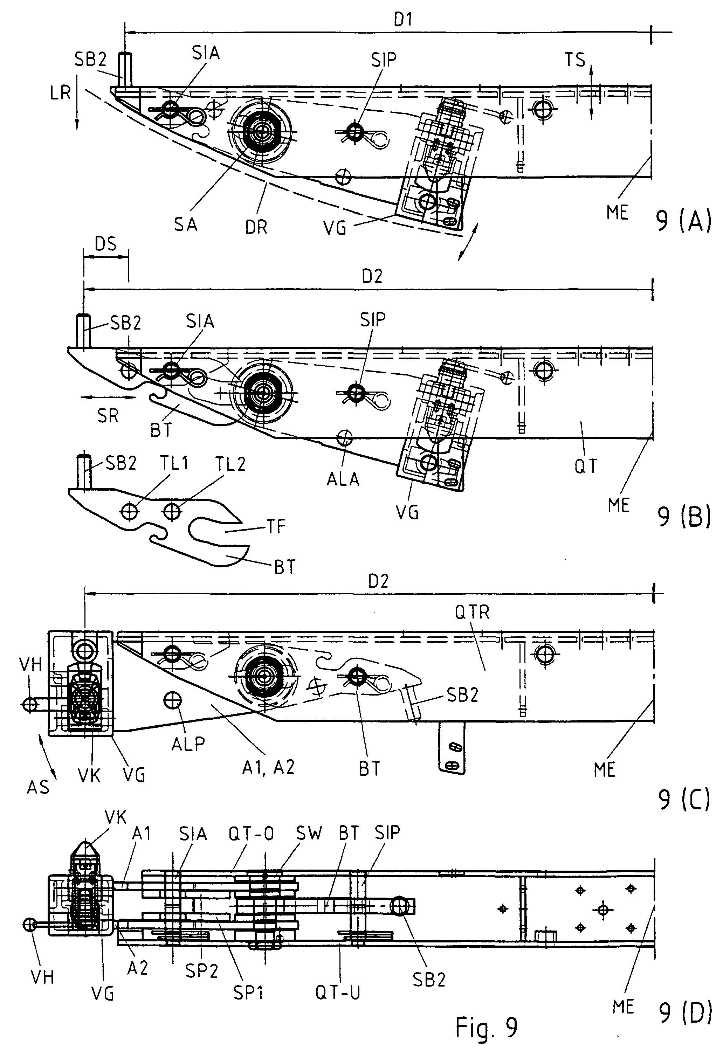

Die in Fig. 9 bis Fig. 11 skizzierten Ausführungsformen sind weitgehend an die bereits anhand der Fig. 1 bis Fig. 6 erläuterte bevorzugte Ausführungsform angelehnt. Die diesbezüglichen vorangehenden Ausführungen gelten im Umfang der Übereinstimmungen im wesentlichen auch für die nachfolgend noch im einzelnen erläuterten weiteren Ausführungen. Insbesondere sind die Konstruktion des Querträgers QT als in Fahrtrichtung zumindest teilweise offenes Profil, der Aufbau eines Schwenkarms aus zwei parallelen Platten A1, A2 und ein Verriegelungsgehäuse mit einem absenkbaren Drehzapfen als erste Verriegelungseinrichtung übernommen.

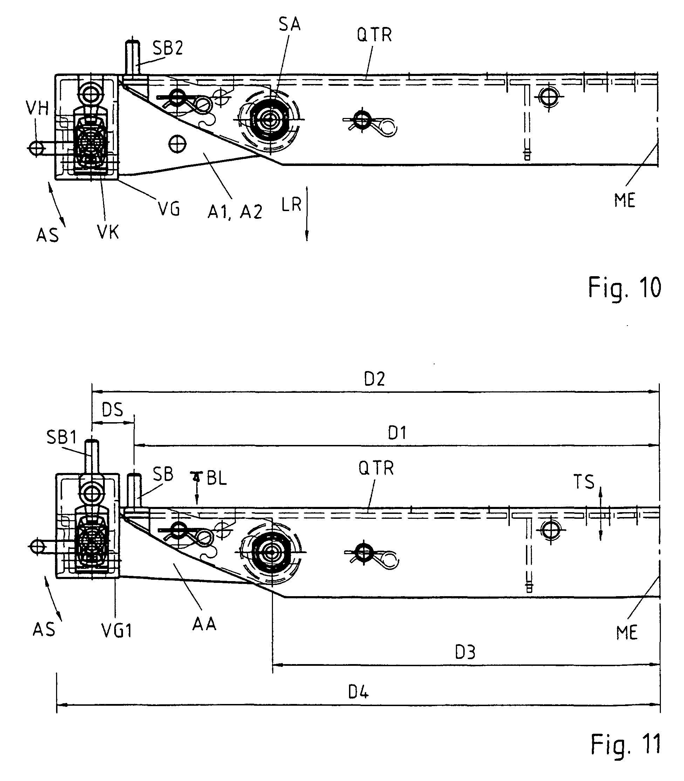

In den Beispielen nach Fig. 9 und Fig. 10 ist ferner ähnlich dem schwenkbaren Bolzenträger aus den vorangehenden Beispielen ein hier aber linear verschiebbarer Bolzenträger plattenförmig ausgebildet und zwischen Stützplatten SP1, SP2 stabil gehalten.

In Übereinstimmung mit den vorangehenden Beispielen sei als erste Verriegelungseinrichtung ein häufig als Twist-Lock bezeichneter, vertikal in einen Container-Eckbeschlag von unten eingreifender und durch Drehung verriegelbarer Zapfen verstanden, wogegen als zweite und dritte Verriegelungseinrichtung horizontale Steckbolzen dienen.

Eine vorteilhafte Ausführungsform ist in Fig. 9 in unterschiedlichen Positionen und Ansichten skizziert, wobei hier die zweite und dritte Verriegelungseinrichtung in Form eines Steckbolzens SB2 identisch sind. Der Steckbolzen ist auf einem Bolzenträger BT angeordnet, welcher als Schiebling in einer quer zur Längsrichtung LR des Fahrgestells verlaufenden Schieberichtung SR verschiebbar ist und durch diese Verschiebung aus dem Querträger entnommen und/oder in wenigstens zwei in Schieberichtung verschiedenen Positionen festgelegt werden kann. Die Festlegung kann beispielsweise durch einen Sicherungsbolzen SIA erfolgen, welcher durch Öffnungen im Querträger und im Bolzenträger durchgreift.

Beispielsweise befindet sich der Bolzenträger BT in der Skizze nach Fig. 9 (A) in einer Arbeitsposition zur Halterung eines überlangen 45'-HC-Containers als einem zweiten Containertyp mit abgeschrägten Eckbeschlägen. Der seitliche Abstand D1 des Steckbolzens SB2 von der Mittelebene ME des Fahrgestells beträgt dann ca. 1045 mm. Durch Lösen des Sicherungsbolzens SIA und Verschieben des Bolzenträgers in Schieberichtung SR nach außen und Festlegen in der in Fig. 9 (B) skizzierten Arbeitsposition liegt der Steckbolzen SB2 um eine Abstandsdifferenz DS weiter außen in einem Abstand D2 von der Mittellängsebene ME des Fahrgestells mit D2 ca. 1130 mm und kann als dritte Verriegelungseinrichtung zur Halterung eines Standard-HC-Containers als dritten Containertyp dienen.

Das Verriegeln und Entriegeln eines Containers zweiten oder dritten Typs auf dem Fahrgestell erfolgt durch Verschieben des Querträgers in Pfeilrichtung TS parallel zur Fahrzeuglängsrichtung LR, ohne dass ein Verschwenken des Bolzenträgers BT erforderlich ist. Eine solche Vorgehensweise zum Verriegeln und Entriegeln ist auch bei den vorausgehend beschriebenen Ausführungen möglich und vorteilhaft, wobei dann die eventuell gegebene Verschwenkbarkeit des den Bolzen tragenden Arm nur noch zum Wechsel der Verriegelungseinrichtung dient. Die Längsverschiebbarkeit des vorderen Querträgers in Längsführungen ist an sich bekannt und kann vorteilhafterweise hydraulisch betätigt sein.

Die erste Verriegelungseinrichtung mit einem vertikal in einen Eckbeschlag eines Containers ersten Typs eingreifenden Steckzapfen VK in einem Verriegelungsgehäuse VG ist in Fig. 9 (A) und Fig. 9 (B) in einer Parkposition durch einen zweiten Sicherungsbolzen SIP festgelegt. Hierbei ist aus Ausführungsformen der vorangehenden Beispiele übernommen, dass der Querträger wenigstens abschnittsweise in Fahrtrichtung, d. h. der Querträger-Rückwand QTR abgewandt, oben ist und das an einem Schwenkarm befestigte Verriegelungsgeäuse VG der ersten Verriegelungseinrichtung in der Parkstellung zwischen oberer QTO und unterer QTU Platte des Querträgers und innerhalb des Durchdrehkreises DR um den Königszapfen des Fahrgestell-Auflagers liegt. Hierbei kann, wie zu diesen vorangehenden Beispielen beschrieben, der Verriegelungszapfen aus der aufrechten Position in das Verriegelungsgehäuse abgeschwenkt sein.

Zum Wechsel auf die erste Verriegelungseinrichtung wird diese aus der in Fig. 9 (A) und Fig. 9 (B) skizzierten Parkposition durch Verschwenken des Schwenkarms um die vertikale Schwenkachse SA in die in Fig. 9 (C) in Draufsicht und in Fig. 9 (D) in Frontansicht skizzierte Arbeitsposition geschwenkt (AS) und der Verriegelungszapfen über das Verriegelungsgehäuse, VG hinaus in die aufrechte Position gebracht. Mittels des Hebels VH kann der Zapfen VK um seine vertikale Achse gedreht werden.

Der Bolzenträger BT, der zwischen Fig. 9 (B) und Fig. 9 (C) isoliert dargestellt ist, kann hierzu aus dem Querträger entnommen und in seine in Fig. 9 (C) und Fig. 9 (D) skizzierte Parkposition zwischen oberer und unterer Platte QTO, QTU des Querträgers gebracht werden. In der isolierten Darstellung des Bolzenträgers sind deutlich zwei Durchbrüche TL1, TL2 durch die Trägerplatte zu erkennen, welche zur Festlegung des Bolzenträgers in den beiden Arbeitspositionen nach Fig. 9 (A) und Fig. 9 (B) dienen. Eine Aussparung TF umgreift in der Arbeitsposition nach Fig. 9 (A) und der Parkposition nach Fig. 9 (C) die Schwenkachse SA. Die dem Bolzen abgewandte Öffnung der Aussparung kann zur Sicherung gegen unbeabsichtigtes Ausfallen überbrückt oder abgeschlossen sein.

Die seitliche Verschiebbarkeit des Bolzenträgers aus der Position nach Fig. 9 (A) mit vollständig innerhalb eines Durchdrehkreises DR mit Radius 2040 mm um den Königszpafen des Auflagers des Fahrgestells auf einem Zugfahrzeug liegender Verriegelungsanordnung führt durch die seitliche Verschiebung des Bolzenträgers in die Position nach Fig. 9 (B) zu einem nur geringen Überstand des Bolzenträgers über dessen Position nach Fig. 9 (A). Hierdurch kann in der Position nach Fig. 9 (B) auch ein 45'-HC-Container mit rechtwinkligen nicht abgeschrägten Eckbeschlägen unter Einhaltung der Durchdrehkreis-Beschränkung gehalten werden, indem der Querträger QT insgesamt um das Längsmaß des Überstandes entgegen der Fahrtrichtung LR verschoben positioniert wird. Der daraus resultierende Überstand des Containers am Fahrzeugheck ist mit ca. 60 mm im Regelfall tolerabel.

Aus der Frontansicht nach Fig. 9 (D) sind weitere den bisher genannten Ausführungsformen der Erfindung ähnliche Konstruktionsdetails ersichtlich. Der Schwenkarm, an welchem das Verriegelungsgehäuse VG außen befestigt ist, kann aus zwei vertikal beabstandeten Armplatten A1, A2 bestehen, aber auch zusätzliche vertikale Wandabschnitte zwischen den Armplatten A1, A2 zur Aussteifung enthalten. Horizontale Stützplatten SP1, SP2, welche mit der Rückwandplatte QTR verbunden, insbesondere verschweißt sind, stützen sowohl die Armplatten A1, A2 des das Verriegelungsgehäuse tragenden Schwenkarms als auch den Bolzenträger BT in dessen Arbeitspositionen nach Fig. 9 (A), 9 (B) vertikal ab. Durchbrüche ALA, ALP in den Platten A1, A2 dienen zur Festlegung des Schwenkarms in der Arbeitsposition nach Fig. 9 (C), (D) bzw. der Parkposition nach Fig. 9 (A), (B).

In Fig. 10 ist eine Abwandlung gezeigt, in welcher in einer zu Fig. 9 (C) entsprechenden Arbeitsposition der ersten Verriegelungseinrichtung mit dem vertikalen Zapfen der verschiebbare Bolzenträger mit dem Steckbolzen SB nicht aus dem Querträger herausgezogen, sondern in der Position nach Fig. 9 (A) verblieben ist und das Verriegelungsgehäuse seitlich davon liegt Dabei ist angenommen, dass das Verriegelungsgehäuse VG mit dem Verriegelungszapfen in richtigem Abstand zur Fahrzeugmittelebene ME, welcher bei den üblichen Containerbeschlägen gleich D2 ist, seitlich neben dem in der Arbeitsposition nach Fig.9 (C) befindlichen Bolzenträger Platz findet. Falls die Geometrie des Verriegelungsgehäuses dies nicht zulässt, kann auch vorgesehen sein, den Bolzenträger über die Arbeitsposition nach Fig. 9 (C) hinaus in einer näher zur Mittelebene ME hin liegenden Parkposition zu verschieben und/oder das Verriegelungsgehäuse nicht genau seitlich des Bolzenträgers sondern in Längsrichtung LR und zur Mittelebene ME hin versetzt anzuordnen und/oder das Verriegelungsgehäuse an der dem Bolzenträger zuweisenden Ecke abzuschrägen. Das Verriegelungsgehäuse ist wiederum am Schwenkarm um die Schwenkachse SA in Pfeilrichtung AS schwenkbar und kann aus der skizzierten Arbeitsposition, in welcher durch vertikal in Eckbeschläge eingreifende Verriegelungszapfen VK ein erster Container-Typ (ISO) gehalten werden kann, in eine Parkposition der in Fig. 9 (A), (B) skizzierten Art verschwenkt werden, um mit dem Steckbolzen SB2 in einer seiner beiden Arbeitspositionen entsprechend Fig. 9 (A), (B) einen HC-Container des zweiten oder dritten Container-Typs zu halten. Die Ausführung nach Fig. 10 ist auch in Verbindung mit einem zusätzlich um die Schwenkachse SA schwenkbaren Bolzenträger BT vorteilhaft realisierbar.

Während in den Ausführungen nach Fig. 1 bis Fig. 6 und nach Fig. 9 und Fig. 10 der Steckbolzen SB2, welcher zur Haltung von Containern zweiter Art dient, auf einem relativ zum Querträger verlagerbaren Bolzenträger befestigt ist und in eine Parkposition und/oder eine weitere Arbeitsposition verlagerbar ist, sieht eine in Fig. 11 skizzierte Ausführungsform vor, einen Steckbolzen SB in zur Halterung von Containern zweiten Typs geeigneter Arbeitsposition fest am Querträger anzuordnen und die Halterung von Containern dritten Typs mittels eines Steckbolzens SB1 vorzunehmen, welcher aus einer Parkposition in eine Arbeitsposition mit Abstand D2 zur Mittelebene ME schwenkbar ist. Der Steckbolzen SB1 kann vorteilhafterweise wie in vorangehenden Ausführungen mit einem Verriegelungsgehäuse VG1 eines Twist-Lock-Steckzapfens verbunden sein. Der Fußpunkt des Steckbolzens SB1, welcher im skizzierten Beispiel an der Rückwand GR des Kombi-Verriegelungsgehäuses VG1 liegt, ist gegenüber dem Fußpunkt des festen Steckbolzens SB entgegen der Fahrtrichtung wenigstens um die Bolzenlänge BL des Steckbolzens SB versetzt. Das Kombi-Verriegelungsgehäuse VG1 ist um die Schwenkachse SA aus der skizzierten Arbeitsstellung in eine Parkstellung entsprechend Fig. 9 (A), (B) verschwenkbar.

In Fig. 9 sind auch vorteilhafte relative Positionen bezüglich der Mittellängsebene ME veranschaulicht. Der Abstand D3 der Schwenkachse des Schwenkarms der ersten Verriegelungseinrichtung liegt vorzugsweise zwischen 60 % und 90 % des Abstands D1 des Steckbolzens SB2 von dieser Mittellängsebene. Die erste Verriegelungseinheit befindet sich in ihrer Parkposition vorteilhafterweise in einem Abstand D4 von der Mittellängsebene, der bei weniger als 50 %, vorzugsweise zwischen 20 % und 40 % von D1 liegt.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar, sofern durch die Ansprüche abgedeckt. Insbesondere können die Verriegelungseinrichtungen im Detail in verschiedener Weise, insbesondere auch mit Elementen aus dem Stand der Technik, aufgebaut sein. Teile der Anordnung können auch quer zur Fahrtrichtung entlang der Querträger verschiebbar, insbesondere auch teleskopierbar in diesen geführt sein, um verschiedene Seitenabstände einzustellen und/oder in eine Parkposition verschiebbar zu sein. Die Ausbildung des Bolzenträgers ist nicht auf die plattenförmige Gestaltung beschränkt. Der Schwenkarm der ersten Verriegelungseinrichtung kann auch quer zur Längsrichtung verschiebbar sein.

## Patentansprüche

1. Anordnung zur Halterung unterschiedlicher Container-Typen auf einem Fahrgestell mittels unterschiedlicher Verriegelungseinrichtungen, welche an einem gemeinsamen, in Längsrichtung des Fahrgestells je nach Container-Typ verschieden positionierbaren Querträger (QT) befestigt sind, wobei,
a) eine erste Verriegelungseinrichtung zur Halterung eines ersten Container-Typs an einem Schwenkarm (A1, A2) einen in einer Halteposition vertikal in einen Eckbeschlag (EB1) des Containers eingreifenden Verriegelungs-Zapfen (VK) trägt
b) eine zweite Verriegelungseinrichtung zur Halterung eines zweiten Container-Typs einen ersten Steckbolzen (SB2) aufweist, welcher in einer Halteposition horizontal in einen Eckbeschlag (EB2) des Containers eingreift,
c) die zweite Verriegelungseinrichtung in der Halteposition innerhalb eines vorgegebenen maximalen Durchdrehkreises (DR) um eine vertikale Lagerachse des Fahrgestells liegt, **dadurch gekennzeichnet, dass**
d) die erste Verriegelungseinrichtung unter Verschwenken des Schwenkarms (A1, A2, SWH) um eine vertikale Schwenkachse (SA) aus der Halteposition in eine erste Parkposition bringbar ist, welche bei gleichzeitiger Halterung eines zweiten Container-Typs durch die zweite Verriegelungseinrichtung innerhalb des maximalen Durchdrehkreises liegt, und
e) die Schwenkachse (SA) des Schwenkarms (A1, A2) gegen den ersten Steckbolzen (SB2) zur Mittellängsebene hin versetzt ist.

2. Anordnung nach Anspruch 1, **dadurch gekennzeichnet, dass** der Abstand (D3) der Schwenkachse (SA) von der Mittellängsebene des Fahrgestells zwischen 60 % und 90 % des Abstands des ersten Steckbolzens (SB2) von der Mittellängsebene liegt.

3. Anordnung nach Anspruch 1 oder 2, **dadurch gekennzeichnet, dass** die erste Parkposition der ersten Verriegelungseinrichtung gegen deren Halteposition zur Mittellängsebene des Containers hin verschwenkt ist.

4. Anordnung nach Anspruch 3, **dadurch gekennzeichnet, dass** die erste Verriegelungseinrichtung in ihrer Parkposition zwischen 10 % und 50 % des Abstands (D1) des ersten Steckbolzens (SB2) von der Mittellängsebene beabstandet ist.

5. Anordnung nach einem der Ansprüche 1 bis 4, **dadurch gekennzeichnet, dass** Schwenkarm (A1, A2) und/oder erste Verriegelungseinrichtung in deren Parkposition zumindest teilweise in eine zur Frontseite weisende Öffnung des Querträgers (QT) einrücken können (Fig. 6).

6. Anordnung nach einem der Ansprüche 1 bis 5, **dadurch gekennzeichnet, dass** der Verriegelungszapfen (VK) in der ersten Verriegelungseinrichtung absenkbar ist.

7. Anordnung nach einem der Ansprüche 1 bis 6, **dadurch gekennzeichnet, dass** der Eckbeschlag (EB2) des zweiten Container-Typs abgeschrägt ist und die zweite Verriegelungseinrichtung in ihrer Halteposition von der Seitenabmessung des Containers zur Mittellängsebene des Fahrgestells hin beabstandet endet.

8. Anordnung nach Anspruch 7, **gekennzeichnet durch** eine dritte Verriegelungseinrichtung, welche in ihrer Halteposition mit einem zweiten Steckbolzen (SB1) horizontal in einen Eckbeschlag eines dritten Container-Typs eingreift, wobei die Eingreifposition des Steckbolzens der dritten Verriegelungseinrichtung weiter (DS) von der Mittellängsebene des Fahrgestells beabstandet ist als die Eingreifposition des Steckbolzens (SB2) der zweiten Verriegelungseinrichtung.

9. Anordnung nach einem der Ansprüche 1 bis 8, **dadurch gekennzeichnet, dass** der erste Steckbolzen (SB1) in relativ zum Querträger (QT) fester Position angeordnet ist.

10. Anordnung nach einem der Ansprüche 1 bis 8, **dadurch gekennzeichnet, dass** der erste Steckbolzen (SB2) auf einem Bolzenträger (T2) der zweiten Verriegelungseinrichtung angeordnet ist, dessen Position relativ zum Querträger veränderbar ist und der eine Halteposition relativ zum Querträger besitzt.

11. Anordnung nach Anspruch 10, **dadurch gekennzeichnet, dass** sich die Haltepositionen des die erste Verriegelungseinrichtung tragenden Schwenkarms (A1, A2) und des Bolzenträgers (T2) der zweiten Verriegelungseinrichtung relativ zu dem gemeinsamen Querträger zumindest teilweise überdecken.

12. Anordnung nach Anspruch 10 oder 11, **dadurch gekennzeichnet, dass** der Bolzenträger (T2) um eine vertikale Schwenkachse (SA) schwenkbar ist.

13. Anordnung nach Anspruch 12, **dadurch gekennzeichnet, dass** die zweite Verriegelungseinrichtung radial bezüglich der vertikalen Schwenkachse (SA) verschiebbar ist.

14. Anordnung nach einem der Ansprüche 1 bis 13, **dadurch gekennzeichnet, dass** die zweite Verriegelungseinrichtung in einer Parkposition von dem Schwenkarm (A1, A2) der ersten Verriegelungseinrichtung überdeckt oder umgeben ist (Fig. 5).

15. Anordnung nach einem der Ansprüche 12 bis 14, **dadurch gekennzeichnet, dass** die Schwenkachsen von Bolzenträger (T2) und Schwenkarm (A1, A2) zusammenfallen.

16. Anordnung nach einem der Ansprüche 12 bis 15, **dadurch gekennzeichnet, dass** Schwenkarm (A1, A2) und Bolzenträger (T2) in bezüglich der Schwenkachse (SA) achsialer Richtung getrennte Abschnitte einnehmen.

17. Anordnung nach Anspruch 16, **dadurch gekennzeichnet, dass** zumindest ein Teil der getrennten Abschnitte achsial beabstandet ist und am Querträger Stützvorrichtungen (SP1, SP2) im Bereich der achsialen Abstände vorgesehen sind.

18. Anordnung nach Anspruch 10 oder 11, **dadurch gekennzeichnet, dass** der Bolzenträger (BT) quer zur Längsrichtung des Fahrzeugs verschiebbar und in wenigstens einer Haltedistanz von einer Fahrgestell-Mittelebene unverschwenkbar arretierbar ist.

19. Anordnung nach Anspruch 18, **dadurch gekennzeichnet, dass** der querverschiebbare Bolzenträger (BT) in zwei verschiedenen Haltedistanzen von der Fahrgestell-Mittelebene arretierbar ist.

20. Anordnung nach Anspruch 18 oder 19, **dadurch gekennzeichnet, dass** der Bolzenträger (BT)in eine von einer Halteposition verschiedene Parkposition verlagerbar ist.

21. Anordnung nach einem der Ansprüche 18 bis 20, **dadurch gekennzeichnet, dass** der Bolzenträger (BT) von dem Querträger (QT) lösbar ist.

22. Anordnung nach einem der Ansprüche 8 bis 21, **dadurch gekennzeichnet, dass** die erste Verriegelungseinrichtung gemeinsam mit der dritten Verriegelungseinrichtung an dem Schwenkarm (A1, A2) angeordnet ist.

23. Anordnung nach Anspruch 22, **dadurch gekennzeichnet, dass** der Steckbolzen (SB1) der dritten Verriegelungseinrichtung verschwenkbar ist und dabei ein Sicherungselement (TI) für den Verriegelungszapfen (VK) in dessen Halteposition betätigt.

24. Anordnung nach einem der Ansprüche 8 bis 23, **dadurch gekennzeichnet, dass** der zweite Steckbolzen (SB1) der dritten Verriegelungseinrichtung von einer Rückwand eines Verriegelungsgehäuses absteht und in der Halteposition der dritten Verriegelungseinrichtung im wesentlichen parallel zur Fahrzeuglängsachse nach hinten weist, und dass der Fußpunkt des zweiten Steckbolzens (SB1) an der Gehäuserückwand gegenüber dem Fußpunkt des ersten Steckbolzens (SB2) in Längsrichtung des Fahrgestells um wenigstens die Länge des ersten Steckbolzens (SB2) versetzt ist (Fig. 11).

25. Anordnung nach einem der Ansprüche 20 bis 24, **dadurch gekennzeichnet, dass** der Querträger (QT) auch bei einem auf dem Fahrgestell aufliegenden zweiten Container-Typ in Längsrichtung des Fahrgestells verschiebbar und arretierbar ist.

26. Anordnung zur Halterung unterschiedlicher Container-Typen auf einem Fahrgestell mittels unterschiedlicher Verriegelungseinrichtungen, welche an einem gemeinsamen, in Längsrichtung des Fahrgestells je nach Container-Typ verschieden positionierbaren Querträger (QT) befestigt sind, wobei,
f) eine erste Verriegelungseinrichtung zur Halterung eines ersten Container-Typs an einem Schwenkarm (SWV) einen in einer Halteposition vertikal in einen Eckbeschlag (EB1) des Containers eingreifenden Verriegelungs-Zapfen (VK) trägt,
g) eine zweite Verriegelungseinrichtung zur Halterung eines zweiten Container-Typs einen ersten Steckbolzen (SB2) aufweist, welcher in einer Halteposition horizontal in einen Eckbeschlag (EB2) des Containers eingreift,
h) die zweite Verriegelungseinrichtung in der Halteposition innerhalb eines vorgegebenen maximalen Durchdrehkreises (DR) um eine vertikale Lagerachse des Fahrgestells liegt,
i) die erste Verriegelungseinrichtung unter Verschwenken des Schwenkarms (SWV) um eine horizontale Schwenkachse aus der Halteposition in eine erste Parkposition bringbar ist, welche bei gleichzeitiger Halterung eines zweiten Container-Typs durch die zweite Verriegelungseinrichtung innerhalb des maximalen Durchdrehkreises liegt, **dadurch gekennzeichnet, dass**
j) die horizontale Schwenkachse (SWV) des Schwenkarms gegen den ersten Steckbolzen (SB2) zur Mittellängsebene hin versetzt ist.

27. Anordnung nach Anspruch 26, **dadurch gekennzeichnet, dass** der Schwenkarm (SWV) in Form eines nach unten offenen U-Profils ausgeführt ist, welches in der Halteposition einer dritten Verriegelungseinrichtung die zweite Verriegelungseinrichtung (SB2) in deren Parkposition seitlich umgibt (Fig. 8).

28. Anordnung nach einem der Ansprüche 1 bis 27, **dadurch gekennzeichnet, dass** die Verriegelungseinrichtungen in ihren Haltepositionen durch wenigstens ein Sicherungselement (SI) festlegbar sind.

29. Anordnung nach einem der Ansprüche 1 bis 28, **dadurch gekennzeichnet, dass** der Querträger im wesentlichen bis zu dem ersten Steckbolzen (SB2) der entgegengesetzt gegenüberliegenden zweiten Verriegelungseinrichtung durchgehend ausgeführt ist.

30. Fahrgestell mit einer Anordnung nach einem der Ansprüche 1 bis 29.

## Claims

1. Arrangement for locking different types of container on a chassis by means of different locking devices, which are fixed to a common crossmember (QT) which can be positioned variously in the longitudinal direction of the chassis, depending on the container type,
a) a first locking device for locking a first container type bearing, on a swinging arm (A1, A2), a locking pin (VK) which engages in vertically in a corner fitting (EB1) of the container when in a locking position
b) a second locking device for locking a second container type having a first lock pin (SB2), which engages horizontally in a corner fitting (EB2) of the container when in a locking position,
c) the second locking device lying within a predefined maximum full rotation circle (DR) about a vertical bearing axis of the chassis when in the locking position,
**characterized in that**
d) by pivoting the swinging arm (A1, A2, SWV) about a vertical pivot axis (SA) the first locking device can be moved from the locking position into a first parking position which, with simultaneous locking of a second container type by means of the second locking device, lies within the maximum full rotation circle, and
e) the pivot axis (SA) of the swinging arm (A1, A2) is offset towards the central longitudinal plane with respect to the first lock pin (SB2).

2. Arrangement according to Claim 1, **characterized in that** the distance (D3) of the pivot axis (SA) from the central longitudinal plane of the chassis is between 60% and 90% of the distance of the first lock pin (SB2) from the central longitudinal plane.

3. Arrangement according to Claim 1 or 2, **characterized in that** the first parking position of the first locking device is pivoted towards the central longitudinal plane of the container with respect to its locking position.

4. Arrangement according to Claim 3, **characterized in that**, in its parking position, the first locking device is spaced apart from the central longitudinal plane by between 10% and 50% of the distance (D1) of the first lock pin (SB2).

5. Arrangement according to one of Claims 1 to 4, **characterized in that**, in its parking position, the swinging arm (A1, A2) and/or first locking device can move at least partly into an opening in the crossmember (QT) that is open towards the front side (Fig. 6).

6. Arrangement according to one of Claims 1 to 5, **characterized in that** the locking pin (VK) can be lowered in the first locking device.

7. Arrangement according to one of Claims 1 to 6, **characterized in that** the corner fitting (EB2) of the second container type is bevelled and the second locking device, in its locking position, ends at a distance spaced apart from the side dimension of the container towards the central longitudinal plane of the chassis.

8. Arrangement according to Claim 7, **characterized by** a third locking device which, in its locking position, engages horizontally in a corner fitting of a third container type by means of a second lock pin (SB1), the engagement position of the lock pin of the third locking device being spaced apart further (DS) from the central longitudinal plane of the chassis than the engagement position of the lock pin (SB2) of the second locking device.

9. Arrangement according to one of Claims 1 to 8, **characterized in that** the first lock pin (SB2) is arranged in a position that is fixed relative to the crossmember (QT).

10. Arrangement according to one of Claims 1 to 8, **characterized in that** the first lock pin (SB2) is arranged on a pin carrier (T2) of the second locking device, whose position relative to the crossmember can be varied and which has a locking position relative to the crossmember.

11. Arrangement according to Claim 10, **characterized in that** the locking positions of the swinging arm (A1, A2) carrying the first locking device and of the pin carrier (T2) of the second locking device at least partly overlap relative to the common crossmember.

12. Arrangement according to Claim 10 or 11, **characterized in that** the pin carrier (T2) can be pivoted about a vertical pivot axis (SA).

13. Arrangement according to Claim 12, **characterized in that** the second locking device can be displaced radially with respect to the vertical pivot axis (SA).

14. Arrangement according to one of Claims 1 to 13, **characterized in that** the second locking device, when in a parking position, is covered or surrounded by the swinging arm (A1, A2) of the first locking device (Fig. 5).

15. Arrangement according to one of Claims 12 to 14,
**characterized in that** the pivot axes of pin carrier (T2) and swinging arm (A1, A2) coincide.

16. Arrangement according to one of Claims 12 to 15, **characterized in that** swinging arm (A1, A2) and pin carrier (T2) occupy separate sections in the axial direction with respect to the pivot axis (SA).

17. Arrangement according to Claim 16, **characterized in that** at least part of the separate sections is spaced apart axially and supporting devices (SP1, SP2) are provided on the crossmember in the region of the axial spacings.

18. Arrangement according to Claim 10 or 11, **characterized in that** the pin carrier (BT) can be displaced transversely with respect to the longitudinal direction of the vehicle and can be locked such that it cannot be pivoted at at least one locking distance from a chassis centre plane.

19. Arrangement according to Claim 18, **characterized in that** the pin carrier (BT) that can be displaced transversely can be locked at two different locking distances from the chassis centre plane.

20. Arrangement according to Claim 18 or 19, **characterized in that** the pin carrier (BT) can be displaced into a parking position that is different from a locking position.

21. Arrangement according to one of Claims 18 to 20, **characterized in that** the pin carrier (BT) can be detached from the crossmember (QT).

22. Arrangement according to one of Claims 8 to 21, **characterized in that** the first locking device is arranged on the swinging arm (A1, A2) together with the third locking device.

23. Arrangement according to Claim 22, **characterized in that** the lock pin (SB1) of the third locking device can be pivoted and, in the process, actuates a securing element (TI) for the locking pin (VK) in the locking position of the latter.

24. Arrangement according to one of Claims 8 to 23, **characterized in that** the second lock pin (SB1) of the third locking device projects from a rear wall of a locking housing and, in the locking position of the third locking device, points rearward, substantially parallel to the vehicle longitudinal axis, and **in that** the base of the second lock pin (SB1) on the housing rear wall is offset with respect to the base of the first lock pin (SB2) in the longitudinal direction of the chassis by at least the length of the first lock pin (SB2) (Fig. 11).

25. Arrangement according to one of Claims 20 to 24, **characterized in that** the crossmember (QT) can be displaced and locked in the longitudinal direction of the chassis even when there is a second container type resting on the chassis.

26. Arrangement for locking different types of container on a chassis by means of different locking devices, which are fixed to a common crossmember (QT) which can be positioned variously in the longitudinal direction of the chassis, depending on the container type,
f) a first locking device for locking a first container type bearing, on a swinging arm (SWV), a locking pin (VK) which engages in vertically in a corner fitting (EB1) of the container when in a locking position,
g) a second locking device for locking a second container type having a first lock pin (SB2), which engages horizontally in a corner fitting (EB2) of the container when in a locking position,
h) the second locking device lying within a predefined maximum full rotation circle (DR) about a vertical bearing axis of the chassis when in the locking position,
i) by pivoting the swinging arm (SWV) about a horizontal pivot axis, it being possible to move the first locking device from the locking position into a first parking position which, with simultaneous locking of a second container type by means of the second locking device, lies within the maximum full rotation circle,
**characterized in that**
j) the horizontal pivot axis (SWA) of the swinging arm is offset towards the central longitudinal plane with respect to the first lock pin (SB2).

27. Arrangement according to Claim 26, **characterized in that** the swinging arm (SWV) is designed in the form of a U profile which is open at the bottom and which, in the locking position of a third locking device, surrounds the second locking device (SB2) laterally in its parking position (Fig. 8).

28. Arrangement according to one of Claims 1 to 27, **characterized in that** the locking devices can be fixed in their locking positions by at least one securing element (SI).

29. Arrangement according to one of Claims 1 to 28, **characterized in that** the crossmember is designed to be substantially continuous as far as the first lock pin (SB2) of the opposite second locking device.

30. Chassis having an arrangement according to one of Claims 1 to 29.

## Revendications

1. Arrangement pour le maintien de différents types de conteneurs sur un châssis au moyen de différents dispositifs de verrouillage qui sont fixés à un support transversal (QT) commun pouvant être positionné différemment dans le sens longitudinal du châssis en fonction du type de conteneur, avec lequel
a) un premier dispositif de verrouillage destiné à maintenir un premier type de conteneur sur un bras pivotant (A1, A2) comporte un tenon de verrouillage (VK) qui, dans une position de maintien, pénètre verticalement dans une armature de coin (EB1) du conteneur,
b) un deuxième dispositif de verrouillage destiné à maintenir un deuxième type de conteneur présente un premier axe enfichable (SB2) qui, dans une position de maintien, pénètre horizontalement dans une armature de coin (EB2) du conteneur,
c) le deuxième dispositif de verrouillage, dans a position de maintien, se trouve à l'intérieur d'un cercle de rotation (DR) maximum prédéfini autour d'un axe support vertical du châssis, **caractérisé en ce que**
d) le premier dispositif de verrouillage peut être amené de la position de maintien dans une première position de stationnement en basculant le bras pivotant (A1, A2, SWV) autour d'un axe de pivotement vertical (SA), et
e) l'axe de pivotement (SA) du bras pivotant (A1, A2) est décalé contre le premier axe enfichable (SB2) en direction du plan longitudinal médian.

2. Arrangement selon la revendication 1, **caractérisé en ce que** l'écart (D3) entre l'axe de pivotement (SA) et le plan longitudinal médian du châssis est compris entre 60 % et 90 % de l'écart entre le premier axe enfichable (SB2) et le plan longitudinal médian.

3. Arrangement selon la revendication 1 ou 2, **caractérisé en ce que** la première position de stationnement du premier dispositif de verrouillage est basculée contre sa position de maintien par rapport au plan longitudinal médian du conteneur.

4. Arrangement selon la revendication 3, **caractérisé en ce que** le premier dispositif de verrouillage dans sa position de stationnement est écarté du plan longitudinal médian de 10 % à 50 % de l'écart (D1) du premier axe enfichable (SB2).

5. Arrangement selon l'une des revendications 1 à 4, **caractérisé en ce que** le bras pivotant (A1, A2) et/ou le premier dispositif de verrouillage dans leur position de stationnement peuvent au moins partiellement reculer dans une ouverture du support longitudinal (QT) dirigée vers le côté avant (figure 6) .

6. Arrangement selon l'une des revendications 1 à 5, **caractérisé en ce que** le tenon de verrouillage (VK) peut être abaissé dans la première position de verrouillage.

7. Arrangement selon l'une des revendications 1 à 6, **caractérisé en ce que** l'armature de coin (EB2) du deuxième type de conteneur est biseautée et le deuxième dispositif de verrouillage dans sa position de maintien se termine avec un écart par au plan longitudinal médian du châssis égal à la cote latérale du conteneur.

8. Arrangement selon la revendication 7, **caractérisé par** un troisième dispositif de verrouillage qui, dans sa position de maintien, pénètre avec un deuxième axe enfichable (SB1) horizontalement dans une armature de coin d'un troisième type de conteneur, la position de pénétration de l'axe enfichable du troisième dispositif de verrouillage étant plus espace (DS) du plan longitudinal central du châssis que la position de pénétration de l'axe enfichable (SB2) du deuxième dispositif de verrouillage.

9. Arrangement selon l'une des revendications 1 à 8, **caractérisé en ce que** le premier axe enfichable (SB2) est disposé dans une position fixe par rapport au support transversal (QT).

10. Arrangement selon l'une des revendications 1 à 8, **caractérisé en ce que** le premier axe enfichable (SB2) est disposé sur un porte-axe (T2) du deuxième dispositif de verrouillage dont la position par rapport au support transversal peut être modifiée et qui possède une position de maintien par rapport au support transversal.

11. Arrangement selon la revendication 10, **caractérisé en ce que** les positions de maintien du bras pivotant (A1, A2) qui supporte le premier dispositif de verrouillage et du porte-axe (T2) du deuxième dispositif de verrouillage se superposent au moins partiellement par rapport au support transversal commun.

12. Arrangement selon la revendication 10 ou 11, **caractérisé en ce que** le porte-axe (T2) peut pivoter autour d'un axe de pivotement vertical (SA).

13. Arrangement selon la revendication 12, **caractérisé en ce que** le deuxième dispositif de verrouillage peut se déplacer dans le sens radial par rapport à l'axe de pivotement vertical (SA).

14. Arrangement selon l'une des revendications 1 à 13, **caractérisé en ce que** le deuxième dispositif de verrouillage dans une position de stationnement est recouvert ou entouré par le bras pivotant (A1, A2) du premier dispositif de verrouillage (figure 5).

15. Arrangement selon l'une des revendications 12 à 14, **caractérisé en ce que** les axes de pivotement du porte-axe (T2) et du bras pivotant (A1, A2) coïncident.

16. Arrangement selon l'une des revendications 12 à 15, **caractérisé en ce que** le bras pivotant (A1, A2) et le porte-axe (T2) prennent des sections différentes dans le sens axial par rapport à l'axe de pivotement (SA).

17. Arrangement selon la revendication 16, **caractérisé en ce qu'**au moins une partie des sections séparées sont espacées dans le sens axial et des dispositifs de protection (SP1, SP2) sont prévus sur le support transversal dans la zone des écarts axiaux.

18. Arrangement selon la revendication 10 ou 11, **caractérisé en ce que** le porte-axe (BT) peut être déplacé transversalement par rapport au sens longitudinal du véhicule et qu'il peut être bloqué de manière à ne pas pouvoir pivoter dans au moins une distance de maintien d'un plan médian du châssis.

19. Arrangement selon la revendication 18, **caractérisé en ce que** le porte-axe (BT) déplaçable dans le sens transversal peut être bloqué dans deux distances de maintien différentes par rapport au plan médian du châssis.

20. Arrangement selon la revendication 18 ou 19, **caractérisé en ce que** le porte-axe (BT) peut être décalé dans une position de stationnement différente d'une position de maintien.

21. Arrangement selon l'une des revendications 18 à 20, **caractérisé en ce que** le porte-axe (BT) peut être détaché du support transversal (QT).

22. Arrangement selon l'une des revendications 8 à 21, **caractérisé en ce que** le premier dispositif de verrouillage est monté sur le bras pivotant (A1, A2) ensemble avec le troisième dispositif de verrouillage.

23. Arrangement selon la revendication 22, **caractérisé en ce que** l'axe enfichable (SB1) du troisième dispositif de verrouillage est pivotant et actionne alors un élément de sécurisation (TI) pour le tenon de verrouillage (VK) dans sa position de maintien.

24. Arrangement selon l'une des revendications 8 à 23, **caractérisé en ce que** le deuxième axe enfichable (SB1) du troisième dispositif de verrouillage est écarté d'une paroi arrière d'un boîtier de verrouillage et, dans la position de maintien du troisième dispositif de verrouillage, est dirigé vers l'arrière pour l'essentiel parallèlement à l'axe longitudinal du châssis, et que le point de base du deuxième axe enfichable (SB1) sur la paroi arrière du boîtier est décalé par rapport au point de base du premier axe enfichable (SB2) dans le sens longitudinal du châssis au moins de la longueur du premier axe enfichable (SB2) (figure 11).

25. Arrangement selon l'une des revendications 20 à 24, **caractérisé en ce que** le support transversal (QT) peut également être déplacé et bloqué dans le sens longitudinal du châssis lorsqu'un deuxième type de conteneur repose sur le châssis.

26. Arrangement pour le maintien de différents types de conteneurs sur un châssis au moyen de différents dispositifs de verrouillage qui sont fixés à un support transversal (QT) commun pouvant être positionné différemment dans le sens longitudinal du châssis en fonction du type de conteneur, avec lequel
f) un premier dispositif de verrouillage destiné à maintenir un premier type de conteneur sur un bras pivotant (SMV) comporte un tenon de verrouillage (VK) qui, dans une position de maintien, pénètre verticalement dans une armature de coin (EB1) du conteneur,
g) un deuxième dispositif de verrouillage destiné à maintenir un deuxième type de conteneur présente un premier axe enfichable (SB2) qui, dans une position de maintien, pénètre horizontalement dans une armature de coin (EB2) du conteneur,
h) le deuxième dispositif de verrouillage, dans la position de maintien, se trouve à l'intérieur d'un cercle de rotation (DR) maximum prédéfini autour d'un axe support vertical du châssis,
i) le premier dispositif de verrouillage peut être amené, en basculant le bras pivotant (SWV) autour d'un axe de pivotement vertical, de la position de maintien dans une première position de stationnement qui, en cas de maintien simultané d'un deuxième type de conteneur par le deuxième dispositif de verrouillage, se trouve à l'intérieur du cercle de rotation maximum, **caractérisé en ce que**
j) l'axe de pivotement horizontal (SWA) du bras pivotant est décalé contre le premier axe enfichable (SB2) en direction du plan longitudinal médian.

27. Arrangement selon la revendications 26, **caractérisé en ce que** le bras pivotant (SWV) est réalisé sous al forme d'un profilé en U ouvert vers le bas qui en position de stationnement d'un troisième dispositif de verrouillage, entoure latéralement la deuxième dispositif de verrouillage (SB2) dans sa position de stationnement (figure 8).

28. Arrangement selon l'une des revendications 1 à 27, **caractérisé en ce que** les dispositifs de verrouillage dans leur position de maintien peuvent être immobilisés par au moins un élément de sécurisation (SI).

29. Arrangement selon l'une des revendications 1 à 28, **caractérisé en ce que** le support transversal est continu pour l'essentiel au moins jusqu'au premier axe enfichable (SB2) du deuxième dispositif de verrouillage disposé à l'opposé.

30. Châssis comprenant un arrangement selon l'une des revendications 1 à 29.
